# EUROPEAN PATENT SPECIFICATION

(11) **EP 4 666 916 B1**
(45) Date of publication and mention of the grant of the patent: **22.07.2026**
(21) Application number: 24182588.4
(22) Date of filing: 17.06.2024
(51) Int. Cl.: A47J 36/24

(54) **FOOD STORING DEVICE AND CORRESPONDING OPERATING METHOD**
LEBENSMITTELAUFBEWAHRUNGSVORRICHTUNG UND ZUGEHÖRIGES BETRIEBSVERFAHREN
DISPOSITIF DE STOCKAGE D'ALIMENTS ET PROCÉDÉ DE FONCTIONNEMENT CORRESPONDANT

(43) Date of publication of application: 24.12.2025
(73) Proprietor: Franke Technology and Trademark Ltd, 6052 Hergiswil (CH)
(72) Inventor: Czapp, Ireneusz, 84-240 Reda (PL); Lebkowski, Wojciech, 84-230 Rumia (PL); Majorek, Aleksander, 84-206 Gniewowo (PL); Tusk, Andrzej, 83-010 Rotmanka (PL)
(74) Representative: LBP Lemcke, Brommer & Partner Patentanwälte mbB

(56) References cited:
- EP-A1- 3 725 192
- US-A1- 2017 079 473
- US-A1- 2021 298 529
- US-B1- 8 437 627

## Description

The invention relates to a food storing device as defined in claim 1.

The invention also relates to a method of operating such a device as defined in claim 13.

The above-mentioned device is intended for the storage of fried food products after the frying process. It has a dedicated storage area and generates heat to maintain a quality of said food products (i.e., French fries, hash browns, onion rings, etc.) by maintaining proper humidity, temperature and crunchiness.

A somewhat similar device is known from EP 3 725 192 B1. Departing from this prior art, it is the object of the present invention to provide a device with further improved characteristics as far as the storage of food products is concerned, combined with further improved energy efficiency. Furthermore, the device shall be easily serviceable and simple to use.

This object is achieved by means of a device having the features of appended claim 1, which device can be operated according to the method defined in appended claim 13.

Advantageous further embodiments of the device and method are defined in the respective dependent claims.

A food storing device according to the present invention comprises at least a bottom section and a roof section that are connected or connectable to each other. Said bottom section comprises a bottom housing and a crumb tray located inside said bottom housing. Said crumb tray divides an interior space of said bottom housing into a first bottom space and a second bottom space. Said bottom housing further has openings that put said first bottom space in fluid connection with an environment of the device. Thus, fresh air can enter said first bottom space through said openings, as will become apparent later.

Said roof section comprises a roof housing that encloses at least one fan, at least one electric heat emitting unit, which is preferably devised in the form of an infrared (IR) radiating unit, and an air flow deflecting element. Said air flow deflecting element divides an interior space of said roof housing into a first roof space and a second roof space. These two roof spaces are, at a first end of said air flow deflecting element, in fluid connection with said first bottom space and with said second bottom space, respectively. In other words: said first roof space is in fluid connection with said first bottom space, and said second roof space is in fluid connection with said second bottom space. Said two roof spaces are in fluid connection with each other at a second end of said air flow deflecting element.

Said roof housing further has at least one opening, located in said second roof space, that faces said second bottom space, at which opening is arranged said heat emitting unit, which can mean that said heat emitting unit is at least partly located within said opening. Said fan is located within said first roof space and is devised to convey air in a direction toward said second end of said air flow deflecting element. Furthermore, said heat emitting unit is at least partly arranged within said second roof space.

In use, i.e., when performing the method of operating the device according to the present invention, fresh air is sucked in from the environment through said openings into said first bottom space by means of said fan. Said fresh air is then conveyed through said first roof space into said second roof space. Optionally, said fresh air passes through a first air flow channel prior to entering said first roof space, as will be explained later. The method also includes operating said electric heat emitting unit to heat any food stuff contained in said second bottom space and heating said fresh air by passing it around the heat emitting unit. Optionally, the method can further include preheating the fresh air inside said first air flow channel by the heated fresh air flowing from said second roof space to and inside a second air flow channel, as will also be explained later. The food stuff is, inter alia, kept warm and crispy by introducing the heated fresh air into the second bottom space.

In this way, the heat emitting unit is used to heat food stuff contained in said second bottom space which corresponds to the dedicated storage area mentioned earlier, e.g., by means of infrared radiation. It generates heat to maintain a quality of said food products (i.e., French fries, hash browns, onion rings, etc.) by maintaining proper humidity, temperature and crunchiness.

At the same time, by passing the fresh air around the heat emitting unit any waste heat produced by said heat emitting unit can be used to heat the fresh air within said second roof space, which heated fresh air is then used for keeping the food stuff warm and crispy by introducing the heated fresh air into the second bottom space (where the food stuff is located). In this way, energy efficiency is greatly enhanced. This energy usage limitation is a key functionality of the device, which was designed to recuperate and use efficiently as much heat as possible by circulating the air inside the different sections of the device.

Further developments of the device enable the user to easily clean the main workspace by providing a removable crumb tray and preferably also a removable salting tray, which salting tray is preferably located within the crumb tray (i.e., in the second bottom space).

The food products can be additionally illuminated from the top by at least one lamp, preferably two lamps, that can be comprised in the roof section.

The device can be used as a countertop unit that works on a flat surface (worktop) area. All key functional components, i.e., any electrically powered units such as fans, lamps, heaters, etc. are preferably localized in the top part (i.e., in said roof section). In one embodiment the device comprises two axial fans, heat emitting units in the form of heat IR emitters and lamps illuminating the food products. Such an approach enables quick assembly and improves serviceability along with simple intuitive design.

In one embodiment, the device is configured such that it sucks in fresh air at the bottom section, e.g., from underneath the bottom section, which fresh air is transferred through air flow channels localized at the back of the device to the top or roof section of the device. At the top the fresh air gets significantly warmed up by passing in close proximity of at least one heat radiator or heat sink element which can be attached to the back of said IR heat emitters. Following that the heated fresh air gets pushed again to the lower area (i.e., said bottom section) of the device and preferably goes under the above-mentioned salting tray, which can be provided with holes that allow for a passage of air, directly to the food products.

Moreover, in one embodiment heat emitting units in the form of IR emitters can heat up the food products since they are preferably directed towards the crumb tray or the salting tray in order to warm up the food by infrared radiation emission.

In one embodiment, the device additionally has two air channels next to each other at the back of the device, one for guiding fresh air up the roof section and one for guiding said heated fresh air down to the bottom section, which facilitates heat exchange so that the heated fresh air that is supposed to impinge on the food products is also warming up the fresh air that is being conveyed to the top section (roof section) before it makes contact with said heat emitting unit(s) and/or heat sink element(s).

The following embodiments of the invention have proved particularly advantageous in practice:
In a preferred embodiment of the device according to the invention, the device further comprises a middle section that connects the bottom section to the roof section. Said middle section has a first air flow channel and a second air flow channel that are separated by a separation wall. Said first air flow channel is in fluid connection with said first bottom space and said second air flow channel is in fluid connection with said second bottom space. Furthermore, said first end of said air flow deflecting element is arranged in continuity with said separation wall whereby, at said first end of said air flow deflecting element, said first roof space is in fluid connection with said first air flow channel and said second roof space is in fluid connection with said second air flow channel.

Said two air flow channels, that are only separated by said separation wall, can be used to achieve the above-mentioned heat exchange between the fresh air and the heated fresh air, as described earlier.

In another preferred embodiment of the device according to the invention, said separation wall is therefore specially devised to allow an exchange of heat between a first air flow through said first air flow channel and a second air flow through said second air flow channel. This can be achieved, e.g., by using a material for said separation wall that has a relatively high thermal conductivity of at least 10 W/(m·K) (e.g., steel), more preferably at least 100 W/(m·K) (e.g., aluminium alloys), most preferably at least 200 W/(m·K) (e.g., aluminium).

In this way, said heat exchange can be made particularly efficient. Aluminium (or alloys thereof) may be preferred because it combines light weight and good heat conductivity.

In order to achieve even more heat exchange efficiency, in yet another preferred embodiment of the device according to the invention said first air flow channel surrounds said second air flow channel over at least part of its circumference, preferably on three sides for a second air flow channel of rectangular cross section.

This achieves a relatively big surface over which an efficient heat exchange can occur.

In still another preferred embodiment of the device according to the invention said heat emitting unit is arranged on a support element that is at least partly arranged within said second roof space, wherein preferably the support element has good thermal conductivity of at least 10 W/(m·K), more preferably at least 100 W/(m·K), most preferably at least 200 W/(m·K).

In this way, said support element will efficiently draw (waste) heat from the heat emitting unit, which (waste) heat can then be used to heat up the fresh air.

In order to further improve energetic efficiency, in still another preferred embodiment of the device according to the invention said heat emitting unit and/or the support element is in contact with at least one heat sink element (or heat radiator) that extends into said second roof space.

In order to increase an interaction surface, said heat sink element preferably has a plurality of fins or ribs. Furthermore, it can be riveted or otherwise fixed to the heat emitting unit and/or to the support element, e.g., glued, brazed or soldered, to ensure good thermal conduction.

In yet another preferred embodiment of the device according to the invention the fan is an axial fan, which has proved to provide the required suction force. Preferably, there are two (axial) fans that can be arranged symmetrically with respect to a centre plane of the device, i.e., a plane that is perpendicular to a support surface for the device.

In another preferred embodiment of the device according to the invention a salting tray can be removably located within the crumb tray and inside said second bottom space. Said salting tray can have holes that allow a passage of (heated) air therethrough in order to warm the food stuff.

In another preferred embodiment of the device according to the invention at least one slidable divider can be provided in or as part of said salting tray. Preferably, said divider can separate two different zones inside the salting tray, e.g., for storing different food products. More preferably, said divider can be freely moved from one side of the salting tray to the other and has no fixed positions.

In still another preferred embodiment of the device according to the invention said opening of the roof section is located in a bottom wall of said roof housing, said bottom wall being inclined at an angle greater 0° with respect to said bottom housing.

This may provide enhanced heating efficiency together with ergonomic advantages for the user when accessing the food products.

In yet another preferred embodiment of the device according to the invention said openings in the bottom housing are arranged in a back wall and/or in a bottom wall thereof.

This has proved advantageous in practice because it can help to prevent blocking of said openings.

In another preferred embodiment of the device according to the invention there are provided adjustable distance elements at a bottom wall of said bottom housing.

While this can enable setting up the device in level configuration it also ensures that there is always enough free space below the device to suck in fresh air.

In another preferred embodiment of the device according to the invention said second air flow channel, at an end of said middle section that is connected to said bottom section, has a width that corresponds to a width of said crumb tray.

This guarantees an even distribution of the heated air in order to heat all of the food stuff inside said second bottom space.

In yet another preferred embodiment of the device according to the invention the first roof space extends over the second roof space and laterally around it on both sides.

In this way there is enough space for drawing in the fresh air, and the air flow can then be channelled along said heat emitting unit and/or said support element and/or said heat sink element in order to dissipate as much heat as possible.

In still another preferred embodiment of the device according to the invention any electric units of the device, e.g., said electric heat emitting unit, said fan and optionally a lighting unit as well as any user control elements, are arranged in said roof section.

This enables easy and comfortable servicing of the device.

In another preferred embodiment of the device according to the invention said bottom section and said roof section and preferably also said middle section, if present, are separable from each other for to allow easy cleaning of the entire device.

Further advantages and characteristics of the invention will become apparent from the following description of preferred embodiments thereof with respect to the appended drawings.
Figure 1 shows a side sectional view in said centre plane of an embodiment of the device according to the invention;
Figure 2 shows a perspective view of an embodiment of the device according to the invention;
Figure 3 shows a plan view of the middle and bottom sections of an embodiment of a device according to the invention;
Figure 4 shows a perspective view of the middle and bottom sections of an embodiment of a device according to the invention;
Figure 5 shows a perspective view of the roof section of an embodiment of a device according to the invention with part of the roof housing removed;
Figure 6 shows another perspective view of the roof section of an embodiment of a device according to the invention with part of the roof housing and at least one additional element removed;
Figure 7 shows another perspective view of the roof section of an embodiment of a device according to the invention with part of the roof housing removed;
Figure 8 shows a perspective view of the middle section of an embodiment of a device according to the invention;
Figure 9 shows another perspective view of the middle section of an embodiment of a device according to the invention; and
Figure 10 shows a perspective view of the bottom section of an embodiment of a device according to the invention with an additional salting tray.

In all of the drawings, the same reference numerals are used to designate identical elements or elements that at least have identical functions.

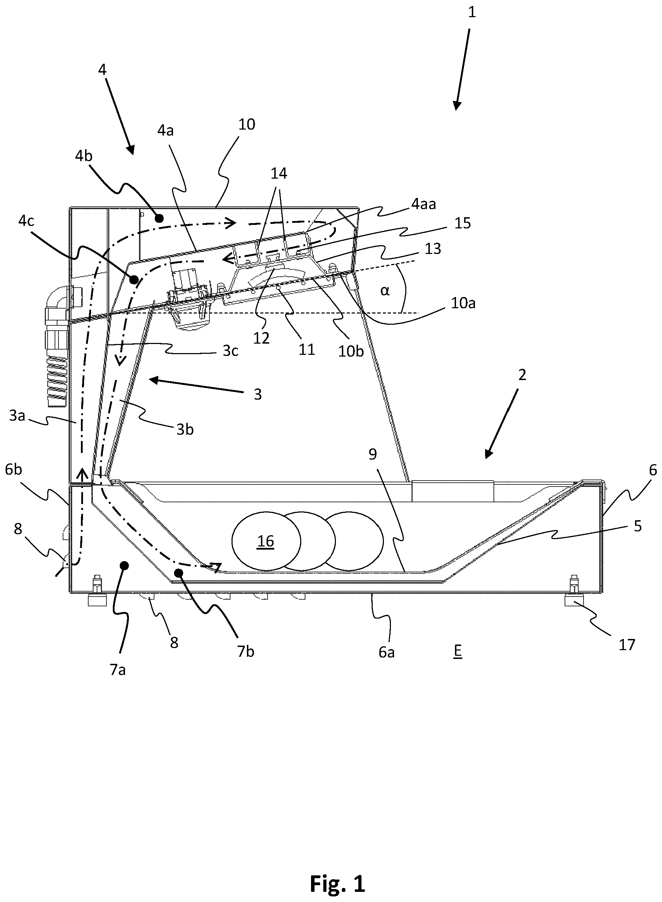

The side sectional view in Figure 1 shows an embodiment of the device 1 according to the invention including the whole air route, cf. the dash-dotted arrows. The device 1 comprises a bottom section 2, a middle section 3 and a top or roof section 4 that are connected together, as shown. A crumb tray 5 divides an inner space of the bottom section 2, which is defined by a bottom housing 6, into a first bottom space 7a and a second bottom space 7b. Air suction holes or openings 8 are provides in a bottom wall 6a and in a back wall 6b of bottom housing 6. Within second bottom space 7b and crumb tray 5 is located a salting tray 9 which has holes (not visible) that allow air passage.

Middle section 3 has two air flow channels 3a and 3b that are separated from each other by separation wall 3c. A first air flow channel 3a is in fluid connection with first bottom space 7a, and a second air flow channel 3b is in fluid connection with second bottom space 7b.

Separation wall 3c continues in the form of deflecting element 4a located inside roof section 4. Said deflecting element 4a defines above it a first roof space 4b and below it a second roof space 4c, which two spaces are connected in the region of a free distal end 4aa of deflecting element 4a. In this way, a first end of said air flow deflecting element 4a is arranged in continuity with said separation wall 3c, whereby, at said first end of said air flow deflecting element 4a, said first roof space 4b is in fluid connection with said first air flow channel 3a and said second roof space 4c is in fluid connection with said second air flow channel 3b.

Roof section 4 further has a housing 10, a bottom wall 10a of which is inclined by an angle α greater 0° with respect to the bottom housing 6. In said bottom wall 10a there is an opening 10b covered by a grille 11 behind which is located an IR heat emitting unit 12. Said heat emitting unit 12 is fixed to a trapezoidal support element 13 that is arranged in said second roof space 4c. Said support element 13 is preferably made of aluminium or the like. On top of support element 13, in said second roof space 4c, are attached two heat sink elements 14 that are preferably also made of aluminium or the like. The heat sink elements 14 are fixed to the support element 13 by means of rivets 15.

Two axial fans are located inside said first roof space 4b, which are not visible in Figure 1. They move air along the path depicted by said dash-dotted arrows. Accordingly, during operation of the device 1 fresh air from the environment E is going to the roof section 4 through the back wall 6b of bottom housing 6 (openings 8), through said first air flow channel 3a, through said fans and then below deflecting element 4a over the IR heat emitting unit 12 and the support element 13 on which said two heat sink elements 14 are fixed. In this way, any excess or waste heat of the heat emitting unit 12, which is devised to heat any food products 16 placed in said salting tray 6 by radiation, is transmitted to the heat sink elements 14 by heat conduction through support element 13 and then dissipated by the moving air, thus heating the air. Said heated air is pushed down to the crumb tray 5 through the second air flow channel 3b. Separation wall 3c preferably ensures good heat exchange between air streams moving in opposite directions through said first air flow channel 3a and said second air flow channel 3b, respectively. From the crumb tray 5, the heated air passes through said holes in salting tray 9 in order to (keep) warm the food products 16 placed in said salting tray 9.

Adjustable distance elements 17 are preferably arranged below bottom housing 6 and serve to place the device 1 on a worktop or tabletop in a level configuration. Furthermore, they serve to keep the bottom openings 8 from being blocked.

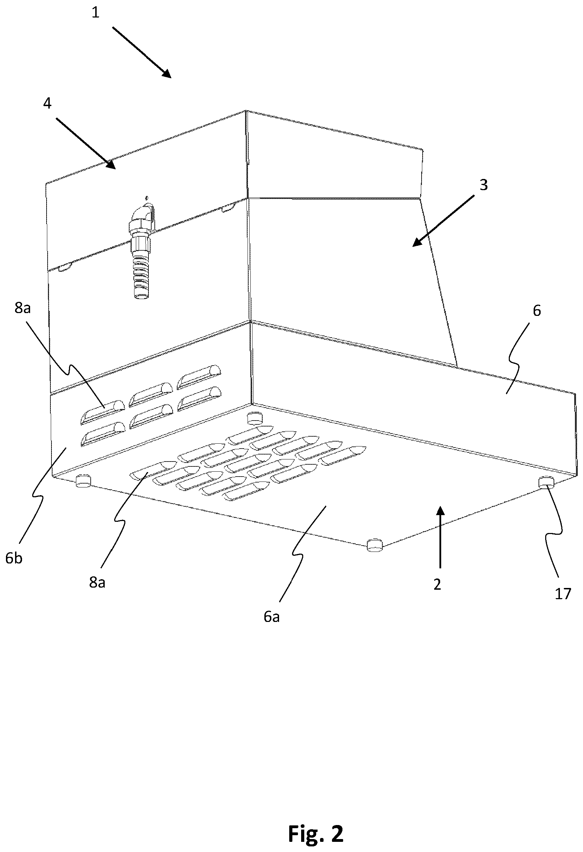

Figure 2 shows that louvres 8a are arranged in the bottom wall 6a of the bottom housing 6 and in the back wall 6b of the bottom housing 6 to protect the openings 8 (cf. Figure 1).

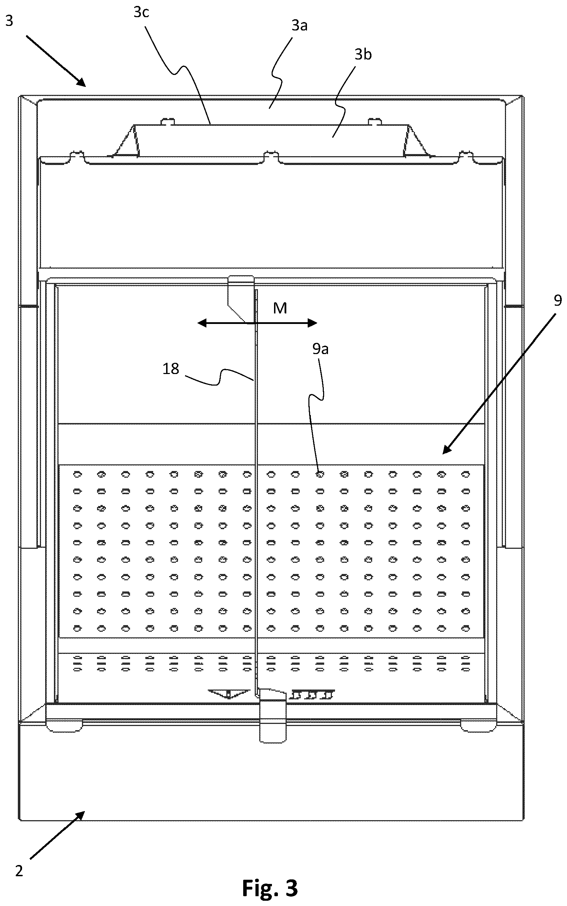

Figure 3 shows the salting tray 9 with holes 9a for heating up a food product (not shown, cf. Figure 1) placed inside salting tray 9. Reference numeral 18 denotes a slidable divider that can be freely moved sideways in the direction of double arrow M.

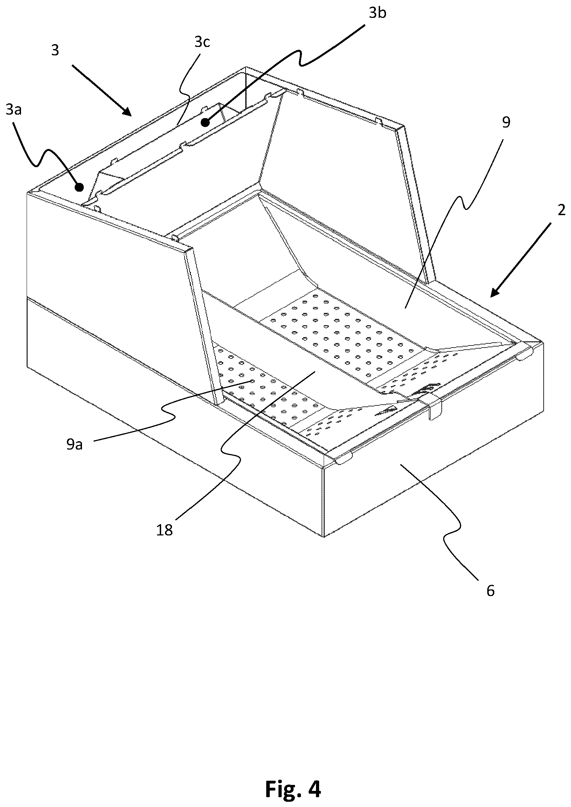

Figure 4 shows similar features as in Figure 3 from a different perspective.

Inside middle section 3 of Figures 3 and 4, respectively, one can see two air channels, said first air channel 3a and said second air channel 3b, wherein the first air channel 3a surrounds the second air channel 3b, which has a (variable) rectangular cross section, on three sides thereof. The first air channel 3a is for the fresh air sucked in from the surroundings, whereas the second air channel 3b is for the heated air that goes to the crumb tray 5 (cf. Figure 1).

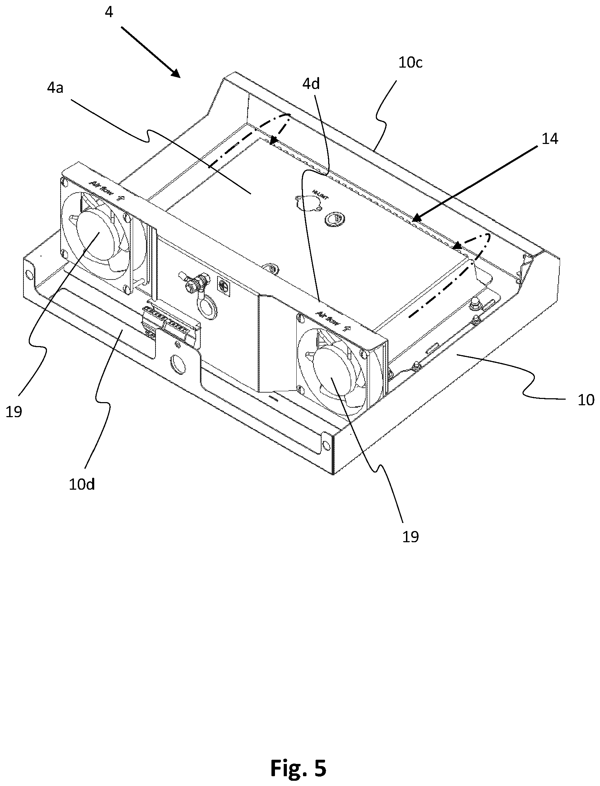

Figure 5 shows part of the roof section 4 with part of its housing 10 removed. Two axial fans 19 are provided for moving the air up from the bottom section 2 (cf. Figure 1), through the roof section 4 and then back to the crumb tray 5 (cf. Figure 1). Air deflector or air deflecting element 4a is placed over the heat sink elements 14 (cf. Figure 1) to direct the air to a front panel 10c of the roof housing 10 and then back over the IR heat emitter unit 12 (cf. Figure 1), cf. the dash-dotted arrows. In this way, the first roof space 4b (cf. Figure 1) extends over the second roof space 4c (cf. Figure 1) and laterally around it on both sides. Opening 10d in the back of the roof housing 10 is supposed to be in fluid connection with said first air flow channel 3a (cf. Figures 1, 3 and 4).

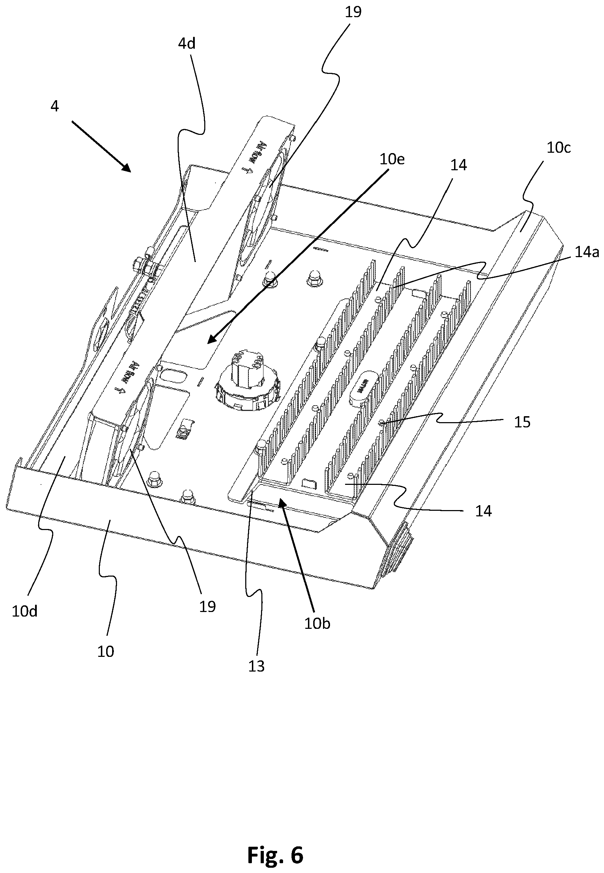

In Figure 6, which shows the arrangement of Figure 5 from a different perspective, air deflecting element 4a (cf. Figure 5) has been removed to depict the heat sink elements 14 fixed on support element 13 by rivets 15. The heat sink elements 14 each have a plurality of heat dissipating fins or ribs 14a.

More specifically, the IR heat emitting unit 12 (cf. Figure 1) is fixed to an aluminium holder (i.e., support element 13), which has two heat sink elements 14 attached to its top surface by means of rivets 15. In a rear part of the roof housing 10, between the fans 19, there are three cutouts 10e through which the heated air is pushed towards the second air channel 3b (cf. Figures 1, 3 and 4) and then down to the crumb tray 5 (cf. Figure 1). The invention is however not limited to any particular number and/or shape of the cutouts 10e. Opening 10d and cutouts 10e are fluidically separated from each other by means of air deflecting element 4a. A further separating element 4d serves to mount the fans 19.

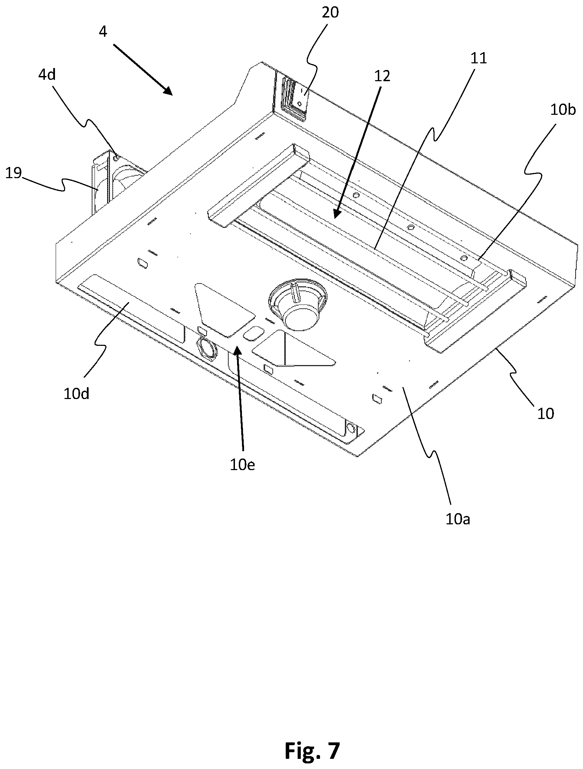

According to the perspective view in Figure 7 the opening (or cutout) 10d in the back is of rectangular shape from side to side, for achieving an undisturbed air flow. Cutouts 10e for the heated air are smaller, but big enough to ensure the passage of a sufficient amount of air to achieve proper temperature and to be able to heat the food products.

In Figure 7, reference numeral 20 denotes a switch that is configured to turn the device on or off. In this way, any electric units of the device, e.g., said electric heat emitting unit 12, said fans 19 and optionally a lighting unit as well as any user control elements, e.g., switch 20, are conveniently arranged in said roof section 4.

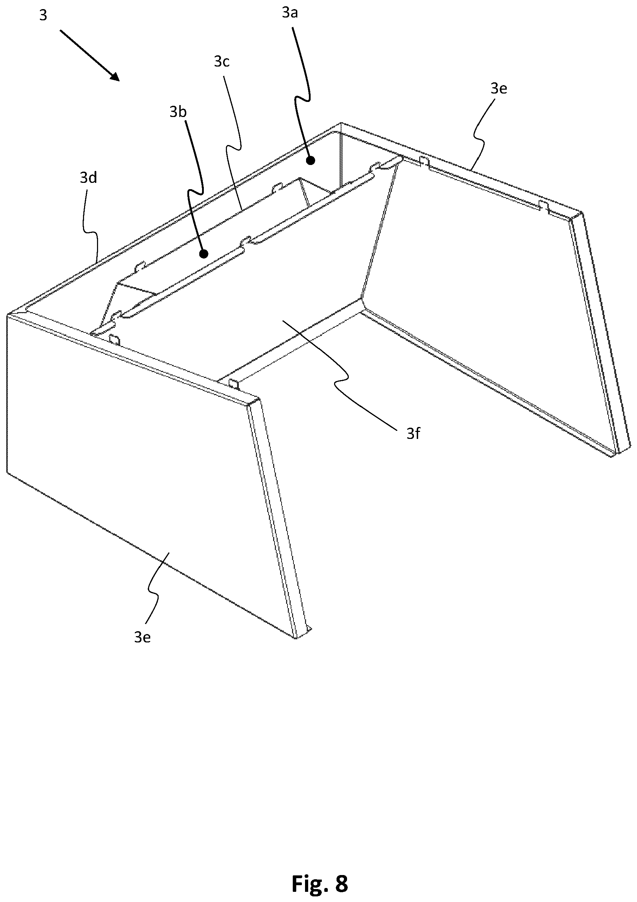

Figure 8 is a perspective view of the middle section 3 (cf. Figure 1) only. The middle section 3 is of overall C-shaped configuration and comprises a back wall 3d and two side walls 3e, 3f. Said back wall 3d and side walls 3e preferably consist of one common bent metal sheet. Essentially parallel (or slightly inclined with respect) to back wall 3d is an intermediate wall 3f, and said first air flow channel 3a is defined between said back wall 3d and said intermediate wall 3f. Previously mentioned separation wall 3c is also of C-shaped configuration is located between said back wall 3d and said intermediate wall 3f and defines said second air flow channel 3b that is nested within said first air flow channel 3a, as explained earlier. In this way, said first air flow channel 3a surrounds said second air flow channel 3b over at least part of its circumference, i.e., on three sides.

The first air flow channel 3a is an air channel for the fresh air, the second air flow channel 3b is an air channel for the heated air.

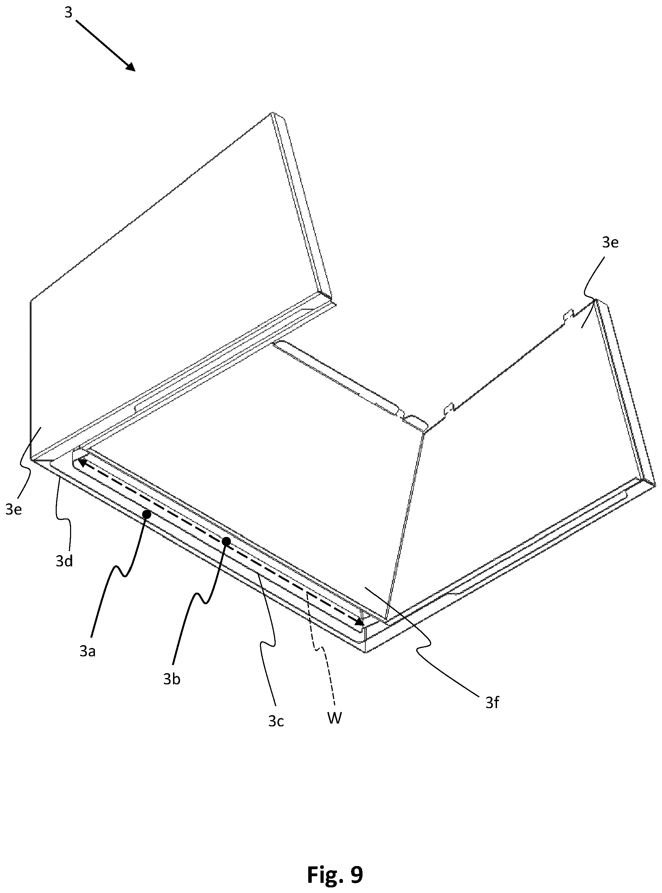

Figure 9 shows another perspective view of the middle section 3 of an embodiment of a device according to the invention.

As can be gathered from Figure 9, a bottom end of the hot air channel (i.e., second air flow channel 3b) is as wide (width W) as the crumb tray 5 (cf. Figure 1) for even air distribution. In other words: the hot air channel (i.e., second air flow channel 3b) displays a variation of its cross-section over its longitudinal extension.

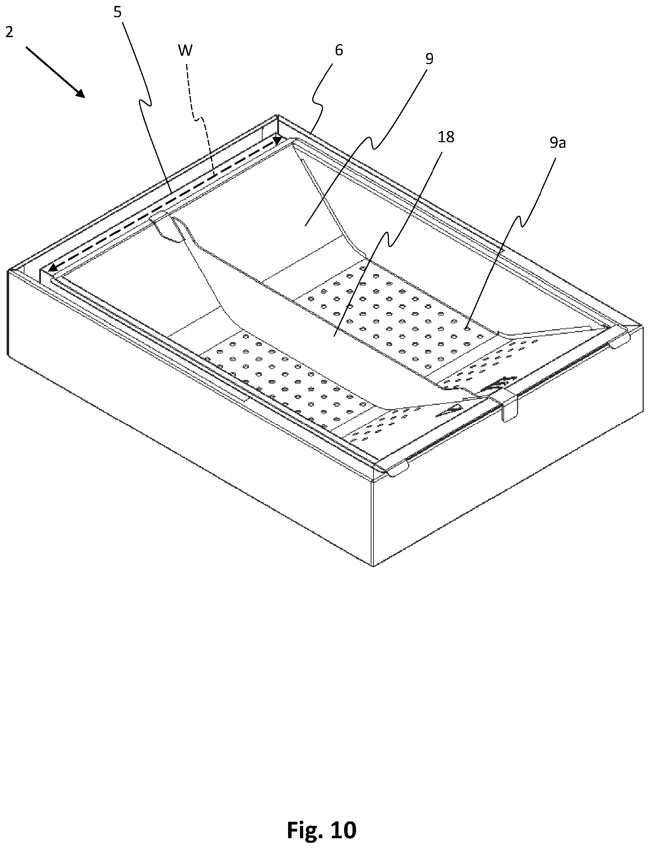

Figure 10 shows a perspective view of only the bottom section 2 of an embodiment of a device according to the invention with crumb tray 5 (also of width W, cf. Figure 9) and with an additional salting tray 9.

Heated air is pushed to the crumb tray 5 from the back, then goes under the salting tray 9 and flows across the whole salting tray 9 through the holes 9a. The sliding divider 18 inside of the salting tray 9 is movable from left to right without any fixed position.

## Claims

1. A food storing device (1), comprising:
at least a bottom section (2) and a roof section (4) that are connected or connectable to each other;
said bottom section (2) comprising a bottom housing and a crumb tray (5) located inside said bottom housing (6), which crumb tray (5) divides an interior space of said bottom housing (6) into a first bottom space (7a) and a second bottom space (7b),
said bottom housing (6) further having openings (8) that put said first bottom space (7a) in fluid connection with an environment (E) of the device (1);
said roof section (4) comprising a roof housing (10) that encloses at least one fan (19), at least one electric heat emitting unit (12) and an air flow deflecting element (4a);
wherein said air flow deflecting element (4a) divides an interior space of said roof housing (10) into a first roof space (4b) and a second roof space (4c) that are, at a first end of said air flow deflecting element (4a), in fluid connection with said first bottom space (7a) and with said second bottom space (7b), respectively, and that are in fluid connection with each other at a second end (4aa) of said air flow deflecting element (4a);
wherein said roof housing (10) in said second roof space (4c) further has at least one opening (10b) that faces said second bottom space (7b), at which opening (10b) is arranged said heat emitting unit (12);
wherein said fan (19) is located within said first roof space (4b) and devised to convey air in a direction toward said second end (4aa) of said air flow deflecting element (4a);
wherein said heat emitting unit (12) is at least partly arranged within said second roof space (4c).

2. The device (1) of claim 1, further comprising
a middle section (3) that connects the bottom section (2) to the roof section (4), said middle section (3) having a first air flow channel (3a) and a second air flow channel (3b) that are separated by a separation wall (3c), said first air flow channel (3a) being in fluid connection with said first bottom space (7a) and said second air flow channel (3b) being in fluid connection with said second bottom space (7b);
wherein said first end of said air flow deflecting element (4a) is arranged in continuity with said separation wall (3c) whereby, at said first end of said air flow deflecting element (4a), said first roof space (4b) is in fluid connection with said first air flow channel (3a) and said second roof space (4c) is in fluid connection with said second air flow channel (3b).

3. The device (1) of claim 2, wherein
said separation wall (3c) is devised to allow an exchange of heat between a first air flow through said first air flow channel (3a) and a second air flow through said second air flow channel (3b), preferably by having a relatively high heat conductivity of at least 10 W/(m·K), more preferably at least 100 W/(m·K), most preferably at least 200 W/(m·K).

4. The device (1) of claim 2 or 3, wherein
said first air flow channel (3a) surrounds said second air flow channel (3b) over at least part of its circumference, preferably on three sides for a second air flow channel (3b) of rectangular cross section.

5. The device (1) of any one of claims 1 to 4, wherein
said heat emitting unit (12) is arranged on a support element (13) that is at least partly arranged within said second roof space (4c), wherein preferably the support element (13) has good thermal conductivity of at least 10 W/(m·K), more preferably at least 100 W/(m·K), most preferably at least 200 W/(m·K).

6. The device (1) of any one of claims 1 to 5, wherein
said heat emitting unit (12) and/or, with reference to claim 5, the support element (13) is in contact with at least one heat sink element (14) that extends into said second roof space (4c), said heat sink element (14) preferably having a plurality of fins or ribs (14a).

7. The device (1) of any one of claims 1 to 6, wherein
the fan (19) is an axial fan, wherein preferably the device (1) comprises two fans (19) that are arranged symmetrically with respect to a centre plane of the device (1).

8. The device (1) of any one of claims 1 to 6, further comprising
a salting tray (9) that is removably located within the crumb tray (5) inside said second bottom space (7b), said salting tray (9) having holes (9a) that allow a passage of air therethrough.

9. The device (1) of any one of claims 1 to 8 with reference to claim 2, wherein
said second air flow channel (3b), at an end of said middle section (3) that is connected to said bottom section (2), has a width (W) that corresponds to a width (W) of said crumb tray (5).

10. The device (1) of any one of claims 1 to 9, wherein
the first roof space (4b) extends over the second roof space (4c) and laterally around it on both sides.

11. The device (1) of any one of claims 1 to 10, wherein
any electric units of the device (1), e.g., said electric heat emitting unit (12), said fan (19) and optionally a lighting unit as well as any user control elements, are arranged in said roof section (4).

12. The device (1) of any one of claims 1 to 11, wherein
said bottom section (2) and said roof section (4) and preferably, with reference to claim 2, also said middle section (3) are separable from each other.

13. A method of operating the device (1) according to any one of the preceding claims, including:
by means of said fan (19), sucking in fresh air from the environment (E) through said openings (8) into said first bottom space (7a) and conveying said fresh through said first roof space (4b) into said second roof space (4c), optionally, with reference to claim 2, through said first air flow channel (3a);
operating said electric heat emitting unit (12) to heat any food stuff (16) contained in said second bottom space (7b);
heating said fresh air by passing it around the heat emitting unit (12);
optionally, with reference to claim 2, preheating the fresh air inside said first air flow channel (3a) by the heated fresh air flowing from said second roof space (4c) to and inside said second air flow channel (3b); and
introducing the heated fresh air into the second bottom space (7b).

14. The method of claim 13, wherein
the heated fresh air is introduced into the second bottom space (7b) in a space between said crumb tray (5) and, with reference to claim 8, said salting tray (9) and passes through said holes of the salting tray (9).

15. The method of claim 13 or 14, wherein
with reference to claim 6, heating said fresh air comprises passing it through and/or around said heat sink element (14).

## Patentansprüche

1. Lebensmittelaufbewahrungsvorrichtung (1), umfassend:
mindestens einen unteren Abschnitt (2) und einen Dachabschnitt (4), die miteinander verbunden oder verbindbar sind;
wobei der untere Abschnitt (2) ein unteres Gehäuse und eine Krümelfangschale (5) umfasst, die sich im Inneren des unteren Gehäuses befindet (6), wobei die Krümelfangschale (5) einen Innenraum des unteren Gehäuses (6) in einen ersten unteren Raum (7a) und einen zweiten unteren Raum (7b) unterteilt, wobei das untere Gehäuse (6) weiter Öffnungen (8) aufweist, die den ersten unteren Raum (7a) in Fluidverbindung mit einer Umgebung (E) der Vorrichtung (1) bringen;
wobei der Dachabschnitt (4) ein Dachgehäuse (10) umfasst, das mindestens einen Lüfter (19), mindestens eine elektrische Wärmeabgabeeinheit (12) und ein Luftstromablenkelement (4a) umschließt;
wobei das Luftstromablenkelement (4a) einen Innenraum des Dachgehäuses (10) in einen ersten Dachraum (4b) und einen zweiten Dachraum (4c) unterteilt, die an einem ersten Ende des Luftstromablenkelements (4a) jeweils in Fluidverbindung mit dem ersten unteren Raum (7a) und dem zweiten unteren Raum (7b) stehen, und die an einem zweiten Ende (4aa) des Luftstromablenkelements (4a) in Fluidverbindung miteinander stehen;
wobei das Dachgehäuse (10) in dem zweiten Dachraum (4c) weiter mindestens eine Öffnung (10b) aufweist, die dem zweiten unteren Raum (7b) zugewandt ist, wobei an dieser Öffnung (10b) die Wärmeabgabeeinheit (12) angeordnet ist;
wobei sich der Lüfter (19) innerhalb des ersten Dachraums (4b) befindet und ausgelegt ist, Luft in Richtung des zweiten Endes (4aa) des Luftstromablenkelements (4a) zu leiten;
wobei die Wärmeabgabeeinheit (12) mindestens teilweise innerhalb des zweiten Dachraums (4c) angeordnet ist.

2. Vorrichtung (1) nach Anspruch 1, weiter umfassend:
einen mittleren Abschnitt (3), der den unteren Abschnitt (2) mit dem Dachabschnitt verbindet (4), wobei der mittlere Abschnitt (3) einen ersten Luftstromkanal (3a) und einen zweiten Luftstromkanal (3b) aufweist, die durch eine Trennwand (3c) voneinander getrennt sind, wobei der erste Luftstromkanal (3a) in Strömungsverbindung mit dem ersten unteren Raum (7a) steht und der zweite Luftstromkanal (3b) in Strömungsverbindung mit dem zweiten unteren Raum (7b) steht;
wobei das erste Ende des Luftstromablenkelements (4a) in Fortsetzung mit der Trennwand (3c) angeordnet ist, wodurch am ersten Ende des Luftstromablenkelements (4a) der erste Dachraum (4b) in Strömungsverbindung mit dem ersten Luftstromkanal (3a) steht und der zweite Dachraum (4c) in Strömungsverbindung mit dem zweiten Luftstromkanal (3b) steht.

3. Vorrichtung (1) nach Anspruch 2, wobei
die Trennwand (3c) ausgelegt ist, um einen Wärmeaustausch zwischen einem ersten Luftstrom durch den ersten Luftstromkanal (3a) und einem zweiten Luftstrom durch den zweiten Luftstromkanal (3b) zu ermöglichen, bevorzugt indem sie eine relativ hohe Wärmeleitfähigkeit von mindestens 10 W/(m·K), bevorzugter von mindestens 100 W/(m·K), besonders bevorzugt von mindestens 200 W/(m·K) aufweist.

4. Vorrichtung (1) nach Anspruch 2 oder 3, wobei
der erste Luftstromkanal (3a) den zweiten Luftstromkanal (3b) über mindestens einen Teil seines Umfangs umgibt, bevorzugt an drei Seiten für einen zweiten Luftstromkanal (3b) des rechteckigen Querschnitts.

5. Vorrichtung (1) nach einem der Ansprüche 1 bis 4, wobei
die Wärmeabgabeeinheit (12) auf einem Stützelement (13) angeordnet ist, das mindestens teilweise innerhalb des zweiten Dachraums (4c) angeordnet ist, wobei das Stützelement (13) bevorzugt eine gute Wärmeleitfähigkeit von mindestens 10 W/(m·K), bevorzugter von mindestens 100 W/(m·K), besonders bevorzugt von mindestens 200 W/(m·K) aufweist.

6. Vorrichtung (1) nach einem der Ansprüche 1 bis 5, wobei
die Wärmeabgabeeinheit (12) und/oder, unter Bezugnahme auf Anspruch 5, das Stützelement (13) mit mindestens einem Kühlkörperelement (14) in Kontakt steht, das sich in den zweiten Dachraum (4c) erstreckt, wobei das Kühlkörperelement (14) bevorzugt eine Vielzahl von Lamellen oder Rippen (14a) aufweist.

7. Vorrichtung (1) nach einem der Ansprüche 1 bis 6,
wobei es sich bei dem Lüfter (19) um einen Axiallüfter handelt, wobei die Vorrichtung (1) bevorzugt zwei Lüfter (19) umfasst, die symmetrisch in Bezug auf eine Mittelebene der Vorrichtung (1) angeordnet sind.

8. Vorrichtung (1) nach einem der Ansprüche 1 bis 6, weiter umfassend
eine Salzschale (9), die herausnehmbar innerhalb der Krümelfangschale (5) innerhalb des zweiten unteren Raums (7b) angeordnet ist, wobei die Salzschale (9) Löcher (9a) aufweist, die einen Luftdurchlass dort hindurch ermöglichen.

9. Vorrichtung (1) nach einem der Ansprüche 1 bis 8 in Bezug auf Anspruch 2, wobei
der zweite Luftstromkanal (3b) an einem Ende des mittleren Abschnitts (3), das mit dem unteren Abschnitt (2) verbunden ist, eine Breite (W) aufweist, die der Breite (W) der Krümelfangschale (5) entspricht.

10. Vorrichtung (1) nach einem der Ansprüche 1 bis 9, wobei
der erste Dachraum (4b) sich über den zweiten Dachraum (4c) erstreckt und diesen an beiden Seiten seitlich umgibt.

11. Vorrichtung (1) nach einem der Ansprüche 1 bis 10, wobei
beliegbige elektrische Einheiten der Vorrichtung (1), z. B. die elektrische Wärmeabgabeeinheit (12), der Lüfter (19) und optional eine Beleuchtungseinheit sowie beliegbige Benutzersteuerelemente, in dem Dachabschnitt (4) angeordnet sind.

12. Vorrichtung (1) nach einem der Ansprüche 1 bis 11, wobei
der untere Abschnitt (2) und der Dachabschnitt (4) und bevorzugt, unter Bezugnahme auf Anspruch 2, auch der mittlere Abschnitt (3) voneinander trennbar sind.

13. Verfahren zum Betreiben der Vorrichtung (1) nach einem der vorstehenden Ansprüche, das einschließt:
mittels des Lüfters (19), Einsaugen von Frischluft aus der Umgebung (E) durch die Öffnungen (8) in den ersten unteren Raum (7a) und Leiten der Frischluft durch den ersten Dachraum (4b) in den zweiten Dachraum (4c), optional, unter Bezugnahme auf Anspruch 2, durch den ersten Luftstromkanal (3a);
Betreiben der elektrischen Wärmeabgabeeinheit (12), um im zweiten unteren Raum (7b) enthaltene Lebensmittel (16) zu erwärmen;
Erwärmen der Frischluft durch Umleiten derselben um die Wärmeabgabeeinheit (12);
optional, unter Bezugnahme auf Anspruch 2, Vorwärmen der Frischluft im Inneren des ersten Luftstromkanals (3a) durch die erwärmte Frischluft, die aus dem zweiten Dachraum (4c) zum und in den zweiten Luftstromkanal (3b) strömt; und
Einleiten der erwärmten Frischluft in den zweiten unteren Raum (7b).

14. Verfahren nach Anspruch 13, wobei
die erwärmte Frischluft in den zweiten unteren Raum (7b) in einem Raum zwischen der Krümelfangschale (5) und, unter Bezugnahme auf Anspruch 8, der Salzschale (9) eingeleitet wird und durch die Öffnungen der Salzschale (9) strömt.

15. Verfahren nach Anspruch 13 oder 14, wobei
unter Bezugnahme auf Anspruch 6, das Erwärmen der Frischluft Umleiten derselben durch und/oder um das Kühlkörperelement (14) herum umfasst.

## Revendications

1. Dispositif de stockage alimentaire (1), comprenant :
au moins une section inférieure (2) et une section supérieure (4) qui sont reliées ou pouvant être reliées l'une à l'autre ;
ladite section inférieure (2) comprenant un boîtier inférieur et un plateau à miettes (5) situé à l'intérieur dudit boîtier inférieur (6), lequel plateau à miettes (5) divise un espace intérieur dudit boîtier inférieur (6) en un premier espace inférieur (7a) et un second espace inférieur (7b), ledit boîtier inférieur (6) présentant en outre des ouvertures (8) qui mettent ledit premier espace inférieur (7a) en connexion fluidique avec un environnement (E) du dispositif (1) ;
ladite section supérieure (4) comprenant un boîtier supérieur (10) qui renferme au moins un ventilateur (19), au moins une unité émettrice de chaleur électrique (12) et un élément de déviation d'écoulement d'air (4a) ;
dans lequel ledit élément de déviation d'écoulement d'air (4a) divise un espace intérieur dudit boîtier supérieur (10) en un premier espace supérieur (4b) et un second espace supérieur (4c) qui sont, à une première extrémité dudit élément de déviation d'écoulement d'air (4a), en connexion fluidique avec ledit premier espace inférieur (7a) et avec ledit second espace inférieur (7b), respectivement, et qui sont en connexion fluidique l'un avec l'autre à une second extrémité (4aa) dudit élément de déviation d'écoulement d'air (4a) ;
dans lequel ledit boîtier supérieur (10) dans ledit second espace supérieur (4c) présente en outre au moins une ouverture (10b) qui fait face audit second espace inférieur (7b), dans laquelle l'ouverture (10b) est agencée ladite unité émettrice de chaleur (12) ;
dans lequel ledit ventilateur (19) est situé dans ledit premier espace supérieur (4b) et conçu pour transporter l'air dans une direction vers ladite seconde extrémité (4aa) dudit élément de déviation d'écoulement d'air (4a) ;
dans lequel ladite unité émettrice de chaleur (12) est au moins partiellement agencée dans ledit second espace supérieur (4c).

2. Dispositif (1) selon la revendication 1, comprenant en outre
une section centrale (3) qui relie la section inférieure (2) à la section supérieure (4), ladite section centrale (3) présentant un premier canal d'écoulement d'air (3a) et un second canal d'écoulement d'air (3b) qui sont séparés par une paroi de séparation (3c), ledit premier canal d'écoulement d'air (3a) étant en connexion fluidique avec ledit premier espace inférieur (7a) et ledit second canal d'écoulement d'air (3b) étant en connexion fluidique avec ledit second espace inférieur (7b) ;
dans lequel ladite première extrémité dudit élément de déviation d'écoulement d'air (4a) est agencée en continuité avec ladite paroi de séparation (3c) de sorte que, à ladite première extrémité dudit élément de déviation d'écoulement d'air (4a), ledit premier espace supérieur (4b) est en connexion fluidique avec ledit premier canal d'écoulement d'air (3a) et ledit second espace supérieur (4c) est en connexion fluidique avec ledit second canal d'écoulement d'air (3b).

3. Dispositif (1) selon la revendication 2, dans lequel
ladite paroi de séparation (3c) est conçue pour permettre un échange de chaleur entre un premier écoulement d'air traversant ledit premier canal d'écoulement d'air (3a) et un second écoulement d'air traversant ledit second canal d'écoulement d'air (3b), de préférence grâce à une conductivité thermique relativement élevée d'au moins 10 W/(m·K), plus préférentiellement au moins 100 W/(m·K), le plus préférentiellement au moins 200 W/(m·K).

4. Dispositif (1) selon la revendication 2 ou 3, dans lequel
ledit premier canal d'écoulement d'air (3a) entoure ledit second canal d'écoulement d'air (3b) sur au moins une partie de sa circonférence, de préférence sur trois côtés pour un second canal d'écoulement d'air (3b) de section transversale rectangulaire.

5. Dispositif (1) selon l'une quelconque des revendications 1 à 4, dans lequel
l'unité émettrice de chaleur (12) est agencée sur un élément de support (13) qui est partiellement agencé dans ledit second espace supérieur (4c), dans lequel de préférence l'élément de support (13) présente une bonne conductivité thermique d'au moins 10 W/(m·K), plus préférentiellement au moins 100 W/(m·K), le plus préférentiellement au moins 200 W/(m·K).

6. Dispositif (1) selon l'une quelconque des revendications 1 à 5, dans lequel
ladite unité émettrice de chaleur (12) et/ou en référence à la revendication 5, l'élément de support (13) est en contact avec au moins un élément dissipateur thermique (14) qui s'étend dans ledit second espace supérieur (4c), ledit élément dissipateur thermique (14) présentant de préférence une pluralité d'ailettes ou de nervures (14a).

7. Dispositif (1) selon l'une quelconque des revendications 1 à 6,
dans lequel le ventilateur (19) est un ventilateur axial, dans lequel de préférence le dispositif (1) comprend deux ventilateurs (19) agencés symétriquement par rapport à un plan central du dispositif (1).

8. Dispositif (1) selon l'une quelconque des revendications 1 à 6, comprenant en outre
un plateau à sel (9) qui est amovible et situé à l'intérieur du plateau à miettes (5) à l'intérieur dudit second espace inférieur (7b), ledit plateau à sel (9) présentant des trous (9a) qui permettent le passage de l'air au travers.

9. Dispositif (1) selon l'une quelconque des revendications 1 à 8 en référence à la revendication 2, dans lequel
ledit second canal d'écoulement d'air (3b), à une extrémité de ladite section centrale (3) qui est reliée à ladite section inférieure (2), présente une largeur (W) qui correspond à une largeur (W) dudit plateau à miettes (5).

10. Dispositif (1) selon l'une quelconque des revendications 1 à 9, dans lequel
le premier espace supérieur (4b) s'étend au-dessus du second espace supérieur (4c) et latéralement autour de celui-ci des deux côtés.

11. Dispositif (1) selon l'une quelconque des revendications 1 à 10, dans lequel
toutes les unités électriques du dispositif (1), par exemple ladite unité émettrice de chaleur électrique (12), ledit ventilateur (19) et facultativement une unité d'éclairage ainsi que tous les éléments de commande utilisateur, sont agencés dans ladite section supérieure (4).

12. Dispositif (1) selon l'une quelconque des revendications 1 à 11, dans lequel
ladite section inférieure (2) et ladite section supérieure (4) et de préférence, en référence à la revendication 2, également ladite section centrale (3) sont séparables mutuellement.

13. Procédé de fonctionnement du dispositif (1) selon l'une quelconque des revendications précédentes, incluant :
au moyen dudit ventilateur (19), l'aspiration de l'air frais de l'environnement (E) à travers lesdites ouvertures (8) dans ledit premier espace inférieur (7a) et le transport dudit air frais à travers ledit premier espace supérieur (4b) dans ledit second espace supérieur (4c), facultativement, en référence à la revendication 2, à travers ledit premier canal d'écoulement d'air (3a) ;
l'actionnement de ladite unité émettrice de chaleur électrique (12) pour chauffer tout produit alimentaire (16) contenu dans ledit second espace inférieur (7b) ;
le chauffage dudit air frais en le faisant passer autour de l'unité émettrice de chaleur (12) ;
facultativement, en référence à la revendication 2, le préchauffage de l'air frais à l'intérieur dudit premier canal d'écoulement d'air (3a) par l'air frais chauffé s'écoulant dudit second espace supérieur (4c) vers et à l'intérieur dudit second canal d'écoulement d'air (3b) ; et
l'introduction de l'air frais chauffé dans le second espace inférieur (7b).

14. Procédé selon la revendication 13, dans lequel
l'air frais chauffé est introduit dans le second espace inférieur (7b) dans un espace entre ledit plateau à miettes (5) et, en référence à la revendication 8, ledit plateau à sel (9) et passe à travers lesdits trous du plateau à sel (9).

15. Procédé selon la revendication 13 ou 14, dans lequel
en référence à la revendication 6, le chauffage dudit air frais consiste à le faire passer à travers et/ou autour dudit élément dissipateur thermique (14).
